# EUROPÄISCHE PATENTSCHRIFT

(11) **EP 2 434 570 B1**
(45) Veröffentlichungstag und Bekanntmachung des Hinweises auf die Patenterteilung: **15.11.2017**
(21) Anmeldenummer: 10178290.2
(22) Anmeldetag: 22.09.2010
(51) Int. Cl.: H01M 8/248, H01M 8/249, C25B 9/20

(54) **Elektrochemische Batterie und Verfahren zur Entfernung von Zellen aus einer derartigen Batterie**
Electrochemical battery and method for removing cells from same
Batterie électrochimique et procédé d' échange de cellules d'une telle batterie

(43) Veröffentlichungstag der Anmeldung: 28.03.2012
(73) Patentinhaber: Siemens Aktiengesellschaft, 80333 München (DE)
(72) Erfinder: Hoffmann, Joachim, 90559, Burgthann (DE); Lersch, Josef, 91336, Heroldsbach (DE); Mattejat, Arno, 91056, Erlangen (DE)

(56) Entgegenhaltungen:
- EP-A2- 1 437 788
- DE-A1- 10 049 801
- JP-A- 2004 164 969
- US-A- 4 615 107

## Beschreibung

Die Erfindung betrifft eine elektrochemische Batterie umfassend einen Stapel in einer Stapelrichtung aufeinander gestapelter Zellen, wobei die Zellen elektrochemische Zellen, insbesondere Brennstoffzellen oder Elektrolysezellen, umfassen, gemäß Oberbegriff des Patentanspruchs 1 und ein Verfahren zur Entfernung von Zellen aus einer derartigen Batterie gemäß Patentanspruch 4.

Eine elektrochemische Batterie umfasst üblicherweise einen Stapel in einer Stapelrichtung aufeinander gestapelter elektrochemischer Zellen, insbesondere Brennstoffzellen oder Elektrolysezellen, und ggf. weiterer für deren Betrieb notwendiger nicht-elektrochemischer Zellen, wie z.B. Befeuchtungszellen zur Befeuchtung von Betriebsgasen der elektrochemischen Zellen. Eine derartige elektrochemische Batterie weist ein Haltesystem zum Zusammenhalten des gesamten Stapels auf. Dieses Haltesystem umfasst beispielsweise eine erste Endplatte und eine zweite Endplatte, zwischen denen der Zellstapel angeordnet ist. An jeder der Endplatten ist eine Anzahl von Zugankern angeordnet, über die die Endplatten in der Stapelrichtung des Brennstoffzellenstapels mittels an den Zugankern angreifender Spannmittel miteinander verspannt sind. Hierdurch werden die Zellen in Stapelrichtung zusammengehalten und einer Verspannung unterworfen, die die Zellen in der Stapelrichtung zusammenpresst. Dies stellt sicher, dass zwischen benachbarten Zellen ein guter mechanischer Kontakt besteht, was einerseits zu einem geringen elektrischen Widerstand zwischen den Zellen und andererseits, insbesondere bei der Verwendung von Dichtungen aus elastischem Material in den Zellen, zu einer guten Abdichtung im Hinblick auf die den Zellen zu- oder abgeführten Betriebsmedien führt.

Ist eine einzelne Zelle in einem solchen Zellstapel schadhaft, muss sie aus dem Stapel entfernt werden. Hierzu muss der Stapel zerlegt werden. Dazu wird zuerst der Druck, der von dem Haltesystem auf den Stapel ausgeübt wird, abgebaut und anschließend das Haltesystem vom Stapel getrennt. Die vom Haltesystem befreiten Zellen lassen sich nun abstapeln. In Abhängigkeit von der Lage der schadhaften Zelle im Stapel muss dabei Zelle für Zelle eine entsprechend große Anzahl unbeschädigter Zellen des Stapels abgebaut werden. Die an sich unbeschädigten Zellen können hierdurch jedoch selbst beschädigt werden bzw. nach dem späteren Wiederaufstapeln und einer nachfolgenden Widerinbetriebnahme Folgeschäden verursachen. Weiterhin führt das Entspannen eines Zellstapels manchmal dazu, dass sich nach einer nachfolgenden erneuten Verspannung und Wiederinbetriebnahme bei einigen Zellen die Leistungsfähigkeit und Effektivität verschlechtert.

Das Dokument JP 2004 164969 A offenbart eine elektrochemische Batterie gemäß Oberbegriff des Patentanspruchs 1.

Es ist Aufgabe vorliegender Erfindung, bei einer elektrochemischen Batterie mit einem Zellstapel gemäß Oberbegriff des Patentanspruchs 1 eine Entfernung einzelner oder mehrerer Zellen für einen Austausch oder eine Reparatur zu ermöglichen, ohne dass die vorgenannten Probleme auftreten. Weiterhin ist es Aufgabe vorliegender Erfindung, ein Verfahren zur Entfernung einzelner oder mehrerer Zellen aus einer derartigen Batterie anzugeben, mit dem diese Probleme vermieden werden können.

Die Lösung der auf die elektrochemische Batterie gerichteten Aufgabe gelingt durch eine Batterie gemäß Patentanspruch 1. Vorteilhafte Ausgestaltungen sind jeweils Gegenstand der Ansprüche 2 bis 3. Die Lösung der auf das Verfahren gerichteten Aufgabe gelingt durch ein Verfahren gemäß Patentanspruch 4.

Eine erfindungsgemäße elektrochemische Batterie umfasst einen Stapel in einer Stapelrichtung aufeinander gestapelter elektrochemischer Zellen, insbesondere Brennstoffzellen oder Elektrolysezellen, ein erstes Haltesystem zum Zusammenhalten des gesamten Stapels und ein zweites Haltesystem zum Zusammenhalten von Teilstapeln des Stapels unabhängig von dem ersten Haltesystem.

Mit Hilfe des zweiten Haltesystems können somit auch ohne das erste Haltesystem gezielt diejenigen Teilstapel, die keine zu entfernende(n) Zelle(n) aufweisen, zusammengehalten werden. Es ist dann möglich, das erste Haltesystem zu lösen, so dass der oder die Teilstapel, die die zu entfernende(n) Zelle(n) aufweisen und folglich nicht von dem zweiten Haltesystem zusammengehalten werden, entspannt werden und durch eine Abstapelung die zu entfernende(n) Zelle(n) daraus entfernt werden können. Die Teilstapel, die keine zu entfernende(n) Zelle(n) aufweisen, können dabei aber weiterhin durch das zweite Haltesystem zusammengehalten werden, wodurch eine Entspannung dieser Teilstapel und somit die Entstehung der eingangs erläuterten Probleme vermieden werden kann.

Bevorzugt sind durch das zweite Haltesystem eine Anzahl in der Stapelrichtung aufeinander folgend angeordneter Teilstapel des Stapels in der Stapelrichtung zusammenhaltbar. Hierdurch können nach einem Lösen des ersten Haltesystems gezielt all die in der Stapelrichtung direkt aufeinander folgend angeordneten Teilstapel weiterhin zusammengehalten werden, die keine zu entfernenden Zellen aufweisen. Der gesamte Zellstapel zerfällt damit in nur wenige Teile (im Normalfall nur in ein oder zwei Teile), wodurch der Aufwand für eine Demontage und anschließende Wiedermontage des Zellstapels verringert werden kann.

Gemäß einer konstruktiv besonders einfachen und zuverlässigen Ausgestaltung umfasst das erste Haltesystem eine erste Endplatte und eine zweite Endplatte, wobei der Zellstapel zwischen der ersten und der zweiten Endplatte angeordnet ist. Mit Hilfe dieser Endplatten kann, beispielsweise mittels an den Endplatten angeordneter Zuganker und an diesen angreifenden Spannmitteln, der gesamte Zellstapel in Stapelrichtung verspannt werden.

Das zweite Haltesystem umfasst erfindungsgemäß Stützeinheiten, die zwischen den Teilstapeln angeordnet sind. Mit Hilfe diese Stützeinheiten können die einzelnen Teilstapel mit ihren Zellen jeweils für sich verspannt und somit zusammengehalten werden. Falls notwendig, können die Stützeinheiten auch derart ausgebildet sein, dass sie sowohl eine gute elektrische Leitfähigkeit zwischen benachbarten Teilstapeln gewährleisten als auch eine mechanische Halte- und Ausgleichsfläche für die Teilstapel darstellen.

Das zweite Haltesystem umfasst dabei erfindungsgemäß Spannverstrebungen mit einem ersten und einem zweiten Ende, wobei zumindest das erste Ende der Spannverstrebungen an einer der Stützeinheiten befestigbar ist. Das zweite Ende kann grundsätzlich an jedem geeigneten mechanischen Fixpunkt, wie z.B. am Ende des gesamten Zellstapels oder an einer Komponente der ersten Haltesystems, befestigt werden. Wenn das erste Haltesystem eine erste Endplatte und eine zweite Endplatte umfasst, ist das zweite Ende gemäß einer konstruktiv besonders einfachen Ausgestaltung an einer der Endplatten befestigbar.

Die Stützeinheiten weisen zur Befestigung der Spannverstrebungen an ihren Außenseiten erfindungsgemäß Schraubgewinde auf.

Der von dem zweiten Haltesystem in Stapelrichtung auf die einzelnen Teilstapel ausgeübte Druck ist erfindungsgemäß unterschiedlich zu dem von dem ersten Haltesystem auf die einzelnen Teilstapel ausgeübten Druck. Um eine Überbelastung des ersten Haltesystems bei einem Anlegen des zweiten Haltesystems zu vermeiden, ist der von dem zweiten Haltesystem in Stapelrichtung auf die einzelnen Teilstapel ausgeübte Druck aber erfindungsgemäß nicht größer als der von dem ersten Haltesystem auf die einzelnen Teilstapel ausgeübte Druck.

Bei einem erfindungsgemäßen Verfahren zum Entfernen einer oder mehrerer Zellen aus einer vorstehend erläuterten Batterie, deren Zellstapel durch das erste Haltesystem durch eine Verspannung in der Stapelrichtung zusammengehalten wird, werden in einem ersten Schritt der oder die Teilstapel, die nicht die zu entfernende(n) Zelle(n) enthalten, in der Stapelrichtung durch das zweite Haltesystem verspannt. Der gesamte Zellstapel wird in diesem Schritt aber noch weiter von dem ersten Haltesystem zusammengehalten. In einem zweiten Schritt wird dann die Verspannung des Zellstapels durch das erste Haltesystem gelöst, so dass es den Stapel nicht mehr zusammenhält. In einem dritten Schritt werden der oder die Teilstapel, die die zu entfernende(n) Zelle(n) enthalten, aus dem Zellstapel entfernt und die zu entfernende(n) Zelle(n) können durch Abstapelung aus diesen (entspannten) Teilstapeln entfernt werden. Der oder die Teilstapel, die nicht die zu entfernende(n) Zelle(n) enthalten, bleiben dabei aber weiterhin durch das zweite Haltesystem verspannt.

Zur Wiedermontage des Zellstapels kann dann eine entfernte (ggf. reparierte) Zelle bzw. eine Austauschzelle in den betreffenden Teilstapel eingesetzt und die vorstehend erläuterten Schritte können in umgekehrter Reihenfolge durchlaufen werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: eine elektrochemische Batterie mit einer Verspannung durch ein erstes Haltesystem,
- FIG 2: eine Entfernung des ersten Teilstapels aus der Batterie von FIG 1,
- FIG 3: eine Entfernung des dritten Teilstapels aus der Batterie von FIG 1,
- FIG 4: eine Detailansicht eines Teilstapels der Batterie von FIG 1 mit Komponenten eines zweiten Haltesystems.

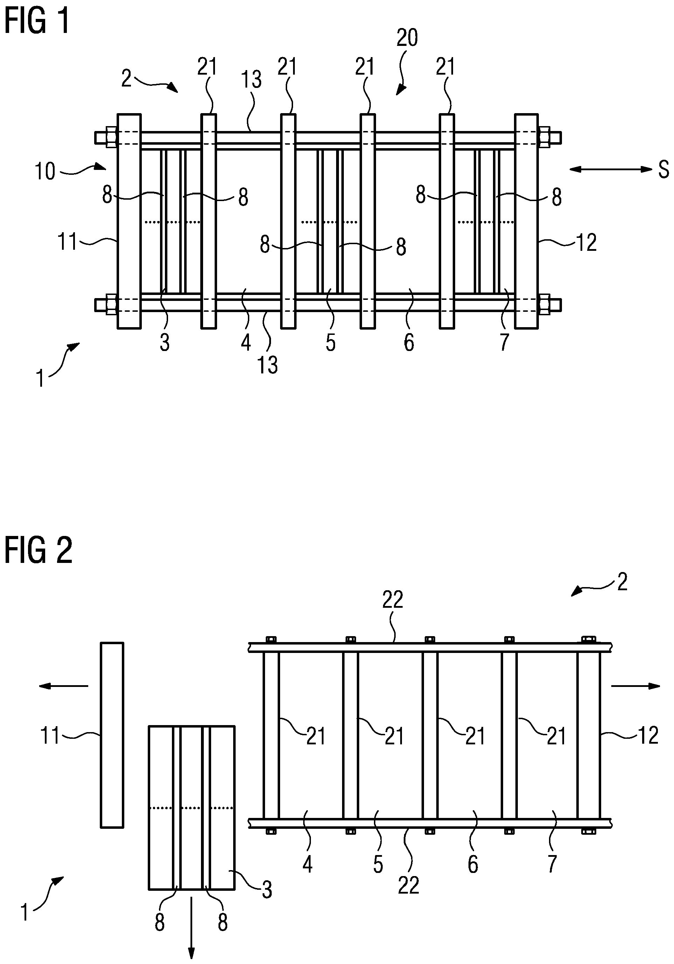

Eine in FIG 1 gezeigte elektrochemische Batterie 1 umfasst einen Stapel 2 in einer Stapelrichtung S aufeinander gestapelte Teilstapel 3, 4, 5, 6, 7, die jeweils eine einzige Zelle 8 oder mehrere in der Stapelrichtung S aufeinander gestapelte Zellen 8 umfassen, von denen zur Vereinfachung der Darstellung nur einige dargestellt sind.

Bei den Zellen 8 kann es sich um elektrochemische Zellen, insbesondere um Brennstoffzellen oder Elektrolysezellen, oder um für deren Betrieb notwendige nicht-elektrochemische Zellen, wie z.B. Befeuchtungszellen zur Befeuchtung von Betriebsgasen der elektrochemischen Zellen, handeln. Die Zellen können dabei, in der Stapelrichtung gesehen, beispielsweise eine runde, rechteckige oder quadratische Grundfläche aufweisen. Im Fall von Brennstoffzellen kann es sich grundsätzlich um jegliche Art von Brennstoffzellen, d.h. um Niedertemperatur-, Mitteltemperatur- oder Hochtemperaturbrennstoffzellen handeln. Bevorzugt handelt es sich bei den Brennstoffzellen um PEM-Brennstoffzellen. Im Fall von PEM-Brennstoffzellen oder PEM-Elektrolysezellen besteht ein Teilstapel 3, 4, 5, 6, 7 beispielsweise aus einer Vielzahl von in der Stapelrichtung S abwechselnd aufeinander gestapelten Bipolarplatten und Membran-Elektrodeneinheiten. Ein Teilstapel 3, 4, 5, 6, 7 kann aber beispielsweise auch aus Befeuchtungszellen zur Befeuchtung von Betriebsgasen der Brennstoffzellen bestehen.

Ein erstes Haltesystem 10 dient zum Zusammenhalten des gesamten Zellstapels 2 und somit auch der Teilstapel 3, 4, 5, 6, 7 und deren Zellen 8 in der Stapelrichtung S während des Normalbetriebs der Zellen 8 (im Fall von Brennstoffzellen während der Stromerzeugung und im Fall von Elektrolysezellen während der Wasserstoff- und Sauerstofferzeugung).

Das erste Haltesystem 10 umfasst eine erste Endplatte 11 und eine zweite Endplatte 12, zwischen denen der Stapel 2 mit den aufeinandergestapelten Teilstapeln 3, 4, 5, 6, 7 angeordnet ist. Weiterhin umfasst das erste Haltesystem 10 mehrere Zuganker 13, die durch den gesamten Stapel 2 und somit auch durch sämtliche Teilstapel 3, 4, 5, 6, 7 verlaufen und über die die Endplatten 11, 12 in der Stapelrichtung des Zellenstapels mittels an den Zugankern 13 angreifender Spannmittel miteinander verspannt sind.

Die Zuganker 13 üben hierdurch einen Druck auf die beiden Endplatten 11, 12 aus, so dass der zwischen den Endplatten 11, 12 angeordnete Zellstapel 2 mitsamt den Teilstapeln 3, 4, 5, 6, 7 und deren Zellen 8 in der Stapelrichtung S verspannt und somit zusammengehalten wird.

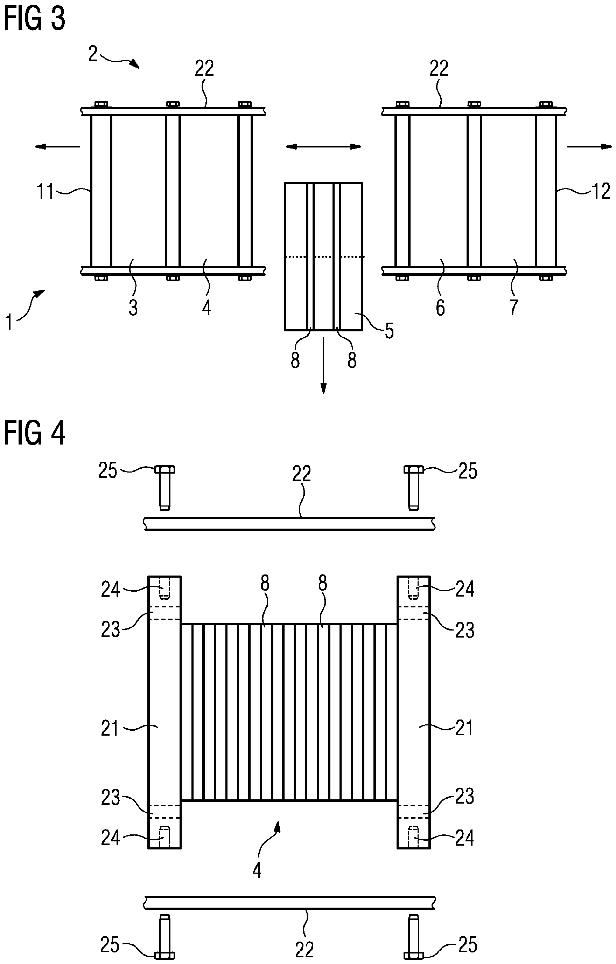

Ein zweites Haltesystem 20 dient zum Zusammenhalten der Teilstapel 3, 4, 5, 6, 7 und ihrer Zellen 8 unabhängig von dem ersten Haltesystem 10. Das zweite Haltesystem 20 umfasst zwischen den Teilstapeln 3, 4, 5, 6, 7 angeordnete plattenförmige Stützeinheiten 21 und in FIG 4 näher dargestellte Spannverstrebungen 22, durch die einzelne oder gleichzeitig auch mehrere der Teilstapel 3, 4, 5, 6, 7 mit ihren jeweiligen Brennstoffzellen 8 miteinander verspannt und somit zusammengehalten werden können.

Die Stützeinheiten 21 weisen, wie beispielhaft für den Fall des Teilstapels 4 im Detail in FIG 4 dargestellt ist, zum einen Durchgänge 23 für eine Durchführung der Zuganker 13 des ersten Haltesystems 10 auf. Zum anderen weisen die Stützeinheiten 21 Schraubgewinde 24 auf, über die mittels Schrauben 25 ein Ende einer Spannverstrebung 22 an einer Stützeinheit 21 befestigbar ist. Die Endplatten 11, 12 weisen ebenfalls entsprechende Schraubgewinde zur Befestigung eines Endes einer Spannverstrebung 22 auf. Die Stützeinheiten 21 weisen dabei sowohl eine gute elektrische Leitfähigkeit als auch eine hohe mechanische Stabilität auf und dienen auch als eine mechanische Halte- und Ausgleichsfläche für die Teilstapel 3, 4, 5, 6, 7.

Für den Fall, dass eine oder mehrere Zellen 8 aus dem Zellstapel 2 entfernt werden sollen, können mit dem zweiten Haltesystem 20 gezielt diejenigen Teilstapel 3, 4, 5, 6, 7, die keine zu entfernenden Zellen 8 aufweisen, verspannt werden und somit auch nach einem Lösen des ersten Haltesystems 10 verspannt bleiben, während ein Teilstapel mit einer zu entfernenden Zelle entspannt wird und diese Zelle durch dessen Abstapelung entfernt werden kann.

Da eine Entspannung und Abstapelung der Zellen in den durch das zweite Haltesystem 20 zusammengehaltenen Teilstapeln vermieden wird, kann es in diesen Teilstapeln zu keiner Beschädigung der Zellen und zu keinen Einschränkungen in deren Leistungsfähigkeit und Effektivität kommen.

Beispielhaft wird nun anhand FIG 2 eine Entfernung einer Zelle 8 aus dem Teilstapel 3 und anhand FIG 3 eine Entfernung einer Zelle 8 aus dem Teilstapel 5 des Zellstapels 2 von FIG 1 erläutert.

Dabei wird jeweils ausgegangen von einem Normalbetrieb der Zellen 8, bei dem der Zellstapel 2 nur durch das erste Haltesystem 10 durch eine Verspannung in der Stapelrichtung S zusammengehalten wird. Im Fall von Brennstoffzellen liegt der Normalbetrieb bei einer Stromerzeugung und im Fall von Elektrolysezellen bei einer Wasserstoff- und Sauerstofferzeugung vor.

Für eine Entfernung einer Zelle 8 aus dem Teilstapel 5 muss - nach einer Abstellung der Versorgung mit Betriebsmedien und/oder des elektrischen Stromflusses- gemäß FIG 2 der diese enthaltende Teilstapel 3 aus dem Zellstapel 2 entfernt werden.

Hierzu werden in einem ersten Schritt die Teilstapel, die nicht die zu entfernende Zelle 8 enthalten, hier die Teilstapel 4, 5, 6, 7, in der Stapelrichtung S durch das zweite Haltesystem 20 verspannt.

Hierzu werden Verstrebungen 22 mit ihrem einen Ende an der an dem zu entfernenden Teilstapel 3 anliegenden Stützeinheit 21 und mit ihrem anderen Ende an der Endplatte 12 befestigt, die bezüglich der Stützeinheit 21 in Stapelrichtung auf der anderen Seite angeordnet ist wie der zu entfernende Teilstapel 3.

Zur weiteren Stabilisierung werden die Verstrebungen 22 auch an allen anderen Stützeinheiten 21 befestigt, die zwischen der Stützeinheit 21, die zwischen den Teilstapeln 3 und 4 angeordnet ist, und der Endplatte 12 angeordnet sind.

Der gesamte Zellstapel 2 wird in diesem Schritt aber noch immer von dem ersten Haltesystem 10 zusammengehalten. Um eine Überbelastung des ersten Haltesystems 10 bei einem Anlegen des zweiten Haltesystems 20 zu vermeiden, ist der von dem zweiten Haltesystem 20 in der Stapelrichtung S auf die Teilstapel 4, 5, 6, 7 ausgeübte Druck nicht größer als der von dem ersten Haltesystem auf die einzelnen Teilstapel 3, 4, 5, 6, 7 ausgeübte Druck.

In einem zweiten Schritt wird dann durch Lösen und Entfernen der Zuganker 13 die Verspannung des Zellstapels 2 durch das erste Haltesystem 10 gelöst, so dass es den Stapel 2 nicht mehr zusammenhält. Die Teilstapel 4, 5, 6, 7 werden nun nur noch durch das zweite Haltesystem 20 verspannt und somit zusammengehalten.

Der zu entfernende Teilstapel 3 kann nun - wie in FIG 2 dargestellt - in einem dritten Schritt aus dem Zellstapel 3 entfernt und durch dessen Abstapelung die zu entfernende Zelle 8 daraus entfernt werden.

Zur Wiedermontage des Zellstapels 2 kann dann die entfernte (ggf. reparierte) Zelle 8 bzw. eine Austauschzelle in den Teilstapel 3 eingesetzt und es können die vorstehend erläuterten Schritte in umgekehrter Reihenfolge durchlaufen werden.

Im Unterschied hierzu muss für eine Entfernung einer Zelle 8 aus dem Teilstapel 5 dann der Teilstapel 5 aus dem Zellstapel 2 entfernt werden (siehe FIG 3).

Die Vorgehensweise ist dann prinzipiell die gleiche wie im Fall von FIG 2, mit dem Unterschied, dass im ersten Schritt Verstrebungen 22 des zweiten Haltesystems 20 an den beiden an dem Teilstapel 5 anliegenden Stützeinheiten 21 befestigt werden. Diese Verstrebungen 22 werden mit ihrem einen Ende an einer dieser Stützeinheiten 21 und mit ihrem anderen Ende an der jeweiligen Endplatte 11 bzw. 12 befestigt, die bezüglich dieser Stützeinheit 21 in Stapelrichtung auf der anderen Seite angeordnet ist wie der zu entfernende Teilstapel 5.

Zur weiteren Stabilisierung werden die Verstrebungen 22 auch an allen anderen Stützeinheiten 21 befestigt, die zwischen dieser Stützeinheit 21 und der jeweiligen Endplatte 11 bzw. 12 angeordnet sind.

Da sämtliche in der Stapelrichtung aufeinander folgend angeordnete Teilstapel des Stapels 2, die keine zu entfernenden Zellen 8 enthalten (im Fall von FIG 2 die Teilstapel 4, 5, 6, 7 und im Fall von FIG 3 die Teilstapel 3, 4 und die Teilstapel 6, 7) in der Stapelrichtung S durch die Verstrebungen 22 zusammengehalten werden, zerfällt der Stapel 2 jeweils in nur wenige Teile (ein einziges Teil sowie den Teilstapel 3 in FIG 3 bzw. nur zwei Teile sowie den Teilstapel 5 in FIG 2). Der Aufwand für die Demontage und die Wiedermontage kann hierdurch klein gehalten werden.

## Patentansprüche

1. Elektrochemische Batterie (1) umfassend
- einen Stapel (2) in einer Stapelrichtung (S) aufeinander gestapelter Zellen (8), wobei die Zellen (8) elektrochemische Zellen, insbesondere Brennstoffzellen oder Elektrolysezellen, umfassen,
- ein erstes Haltesystem (10) zum Zusammenhalten des gesamten Stapels (2),
- ein zweites Haltesystem (20) zum Zusammenhalten von Teilstapeln (3, 4, 5, 6, 7) des Stapels (2) unabhängig von dem ersten Haltesystem (10) zum Entfernen von einer oder mehreren Zellen (8) aus der elektrochemischen Batterie (1), wobei durch das zweite Haltesystem (20) eine Anzahl in der Stapelrichtung (S) aufeinander folgend angeordneter Teilstapel (3, 4, 5, 6, 7) des Stapels (2) in der Stapelrichtung (S) zusammenhaltbar sind, wobei das zweite Haltesystem (20) Stützeinheiten (21) umfasst, die zwischen den Teilstapeln (3, 4, 5, 6, 7) angeordnet sind,
**dadurch gekennzeichnet, dass** der von dem zweiten Haltesystem (20) in Stapelrichtung (S) auf die einzelnen Teilstapel (3, 4, 5, 6, 7) ausgeübte Druck sich von dem vom ersten Haltesystem (10) auf die einzelnen Teilstapel (3, 4, 5, 6, 7) ausgeübten Druck unterscheidet und der von dem zweiten Haltesystem (20) in Stapelrichtung (S) auf die einzelnen Teilstapel (3, 4, 5, 6, 7) ausgeübte Druck nicht größer ist als der von dem ersten Haltesystem (10) auf die einzelnen Teilstapel (3, 4, 5, 6, 7) ausgeübte Druck, und wobei das zweite Haltesystem (20) Spannverstrebungen (22) mit jeweils einem ersten und einem zweiten Ende umfasst, wobei zumindest das erste Ende der Spannverstrebungen (22) an einer der Stützeinheiten (21) befestigbar ist, und wobei die Stützeinheiten (21) Schraubgewinde (24) zur Befestigung der Spannverstrebungen (22) aufweisen.

2. Elektrochemische Batterie (1) nach Anspruch 1,
**dadurch gekennzeichnet, dass** das erste Haltesystem (10) eine erste Endplatte (11) und eine zweite Endplatte (12) umfasst, wobei der Zellstapel (2) zwischen der ersten und der zweiten Endplatte (11, 12) angeordnet ist.

3. Elektrochemische Batterie (1) nach Anspruch 2,
**dadurch gekennzeichnet, dass** das zweite Ende der Spannverstrebungen (22) an einer der Endplatten (11, 12) befestigbar ist.

4. Verfahren zum Entfernen einer oder mehrerer Zellen (8) aus einer elektrochemischen Batterie (1) nach einem der vorhergehenden Ansprüche, deren Zellstapel (2) durch das erste Haltesystem (10) durch eine Verspannung in der Stapelrichtung (S) zusammengehalten wird, **dadurch gekennzeichnet, dass**
- in einem ersten Schritt der oder die Teilstapel (3, 4, 5, 6, 7), die nicht die zu entfernende(n) Zelle(n) (8) enthalten, in der Stapelrichtung (8) durch das zweite Haltesystem (20) verspannt werden,
- in einem zweiten Schritt die Verspannung des Zellstapels (2) durch das erste Haltesystem (10) gelöst wird,
- in einem dritten Schritt der oder die Teilstapel(3, 4, 5, 6, 7), die die zu entfernende(n) Zelle(n) (8) enthalten, aus dem Zellstapel (2) entfernt werden,
- wobei der von dem zweiten Haltesystem (20) in Stapelrichtung (S) auf die einzelnen Teilstapel (3, 4, 5, 6, 7) ausgeübte Druck sich von dem vom ersten Haltesystem (10) auf die einzelnen Teilstapel (3, 4, 5, 6, 7) ausgeübten Druck unterscheidet und der von dem zweiten Haltesystem (20) in Stapelrichtung (S) auf die einzelnen Teilstapel (3, 4, 5, 6, 7) ausgeübte Druck nicht größer ist als der von dem ersten Haltesystem (10) auf die einzelnen Teilstapel (3, 4, 5, 6, 7) ausgeübte Druck.

## Claims

1. Electrochemical battery (1) comprising
- a stack (2) of cells (8) stacked on top of one another in a stack direction (S), wherein the cells (8) comprise electrochemical cells, in particular fuel cells or electrolysis cells,
- a first retaining system (10) for binding the entire stack (2),
- a second retaining system (20) for binding partial stacks (3, 4, 5, 6, 7) of the stack (2) independently from the first retaining system (10) in order to remove one or more cells (8) from the electrochemical battery (1), wherein the second retaining system (20) makes it possible for a number of partial stacks (3, 4, 5, 6, 7) of the stack (2) arranged successively on top of one another in the stack direction (S) to be able to be bound in the stack direction (S), wherein the second retaining system (20) comprises support units (21), which are arranged between the partial stacks (3, 4, 5, 6, 7),
**characterised in that** the pressure exerted by the second retaining system (20) in the stack direction (S) on the individual partial stacks (3, 4, 5, 6, 7) differs from the pressure exerted by the first retaining system (10) on the individual partial stacks (3, 4, 5, 6, 7) and the pressure exerted by the second retaining system (20) in the stack direction (S) on the individual partial stacks (3, 4, 5, 6, 7) is not greater than the pressure exerted by the first retaining system (10) on the individual partial stacks (3, 4, 5, 6, 7), and wherein the second retaining system (20) comprises clamping braces (22), each with a first and a second end, wherein at least the first end of the clamping braces (22) is able to be fastened to one of the support units (21), and wherein the support units (21) have screw threads (24) for fastening the clamping braces (22).

2. Electrochemical battery (1) according to claim 1, **characterised in that** the first retaining system (10) comprises a first end plate (11) and a second end plate (12), wherein the cell stack (2) is arranged between the first and the second end plate (11, 12).

3. Electrochemical battery (1) according to claim 2, **characterised in that** the second end of the clamping braces (22) is able to be fastened to one of the end plates (11, 12).

4. Method for removing one or more cells (8) from an electrochemical battery (1) according to one of the preceding claims, the cell stack (2) of which is bound by the first retaining system (10) by being clamped in the stack direction (S), **characterised in that**
- in a first step the partial stack(s) (3, 4, 5, 6, 7) which do not contain the cell(s) to be removed (8) are clamped in the stack direction (8) by the second retaining system (20),
- in a second step the clamping of the cell stack (2) by the first retaining system (10) is triggered,
- in a third step the partial stack(s) (3, 4, 5, 6, 7) which contain the cells(s) to be removed (8) are removed from the cell stack (2),
- wherein the pressure exerted by the second retaining system (20) in the stack direction (S) on the individual partial stacks (3, 4, 5, 6, 7) differs from the pressure exerted by the first retaining system (10) on the individual partial stacks (3, 4, 5, 6, 7) and the pressure exerted by the second retaining system (20) in the stack direction (S) on the individual partial stacks (3, 4, 5, 6, 7) is not greater than the pressure exerted by the first retaining system (10) on the individual partial stacks (3, 4, 5, 6, 7).

## Revendications

1. Batterie (1) électrochimique comprenant
- un empilement (2) de cellules (8) empilées les unes sur les autres dans une direction (S) d'empilement, les cellules (8) étant des cellules électrochimiques, notamment des piles à combustible ou des cellules d'électrolyse,
- un premier système (10) de maintien, pour maintenir ensemble l'empilement (2),
- un deuxième système (20) de maintien, pour maintenir ensemble des sous-empilements (3, 4, 5, 6, 7) de l'empilement (2), indépendamment du premier système (10) de maintien ou retirer une ou plusieurs cellules (8) de la batterie (1) électrochimique, dans laquelle, par le deuxième système (20) de maintien, un certain nombre de sous-empilements (3, 4, 5, 6, 7) de l'empilement (2), se succédant dans la direction (S) d'empilement, peuvent être maintenus ensemble dans la direction (S) d'empilement, le deuxième système (20) de maintien comprenant des unités (21) d'appui disposées entre les sous-empilements (3, 4, 5, 6, 7),
**caractérisée en ce que** la pression appliquée sur les divers sous-empilements (3, 4, 5, 6, 7), dans la direction (S) d'empilement, par le deuxième système (20) de maintien, se distingue de la pression appliquée aux sous-empilements (3, 4, 5, 6, 7) individuels par le premier système (10) de maintien et la pression appliquée aux divers empilements (3, 4, 5, 6, 7) individuels dans la direction (S) d'empilement par le deuxième système (20) de maintien n'est pas plus grande que la pression appliquée aux sous-empilements (3, 4, 5, 6, 7) individuels par le premier système (10) de maintien, le deuxième système (20) de maintien comprenant des entretoisements (22) de serrage ayant respectivement une première et une deuxième extrémités, au moins la première extrémité des entretoisements (22) de serrage pouvant être fixée à l'une des unités (21) d'appui, les unités (21) d'appui ayant des filetages de fixation des entretoisements (22) de serrage.

2. Batterie (1) électrochimique suivant la revendication 1, **caractérisée en ce que** le premier système (10) de maintien comprend un premier plateau (11) d'extrémité, un deuxième plateau (12) d'extrémité, l'empilement (2) de cellules étant disposé entre le premier et le deuxième plateaux (11, 12) d'extrémité.

3. Batterie (1) électrochimique suivant la revendication 2, **caractérisée en ce que** la deuxième extrémité des entretoisements 22) de serrage peut être fixée à l'un des plateaux (11, 12) d'extrémité.

4. Procédé pour retirer une ou plusieurs cellules (8) d'une batterie (1) électrochimique suivant l'une des revendications précédentes, dont l'empilement (2) de cellules est maintenu ensemble par le premier système (10) de maintien par un serrage dans la direction (S) d'empilement, **caractérisé en ce que**
- dans un premier stade, on serre, par le deuxième système (20) de maintien, le ou les sous-empilement(s) (3, 4, 5, 6, 7), qui comporte(nt) la ou les cellule(s) (8) qui ne sont pas à retirer,
- dans un deuxième stade, on déserre le serrage de l'empilement (2) de cellules par le premier système (10) de maintien,
- dans un troisième stade, on retire de l'empilement (2) de cellules le ou les sous-empilement(s) (3, 4, 5, 6, 7), qui comporte(nt) la ou les cellule(s) (8) à retirer,
- dans lequel la pression appliquée aux divers sous-empilements (3, 4, 5, 6, 7), dans le sens (S) d'empilage par le deuxième système (20) de maintien, se distingue de la pression appliquée aux divers sous-empilements (3, 4, 5, 6, 7) par le premier système (10) de maintien et la pression appliquée aux sous-empilements (3, 4, 5, 6, 7) individuels dans le sens (S) d'empilement par le deuxième système (20) de maintien n'est pas plus grande que la pression appliquée aux divers sous-empilements (3, 4, 5, 6, 7) par le premier système (10) de maintien.
